Europäisches Patentamt

European Patent Office

Office européen des brevets

(11) Veröffentlichungsnummer : **0 079 480**
**B1**

(12) EUROPÄISCHE PATENTSCHRIFT

(45) Veröffentlichungstag der Patentschrift :
26.06.85

(51) Int. Cl.⁴ : **F 16 J  15/34, F 16 J 15/46,**
**B 63 H 23/32**

(21) Anmeldenummer : 82109729.2

(22) Anmeldetag : 21.10.82

(54) **Abdichtungsanordnung mit einem Radialgleitring.**

(30) Priorität : 05.11.81 DE 3143866

(43) Veröffentlichungstag der Anmeldung :
25.05.83 Patentblatt 83/21

(45) Bekanntmachung des Hinweises auf die Patenterteilung : 26.06.85 Patentblatt 85/26

(84) Benannte Vertragsstaaten :
DE FR GB IT NL SE

(56) Entgegenhaltungen :
CH-A-  308 974
DE-A- 1 918 804
DE-A- 2 313 388
DE-A- 2 646 475
DE-A- 2 845 200
DE-A- 2 918 418
DE-B- 1 808 970
FR-A- 1 517 668
US-A- 2 648 554
US-A- 3 642 291

(73) Patentinhaber : Howaldtswerke-Deutsche Werft
Aktiengesellschaft Hamburg und Kiel
Schwentinestrasse
D-2300 Kiel 14 (DE)

(72) Erfinder : von Bergen, Ernst Peter
Langenfelder Strasse 55
D-2000 Hamburg 50 (DE)

(74) Vertreter : Kaiser, Henning et al
Howaldtswerke-Deutsche Werft Aktiengesellschaft
Hamburg und Kiel Patentabteilung Rossweg 20 Postfach 11 14 80
D-2000 Hamburg 11 (DE)

## Beschreibung

Die Erfindung betrifft eine Abdichtungsanordnung für rotierende Wellen, die einen aus sich überlappenden Segmenten bestehenden Radialgleitring enthält. Sie ist insbesondere als Stevenrohrabdichtung für Seeschiffe gedacht.

Es ist bekannt, Radialgleitringe aus Segmenten, die an ihrer inneren Umfangsfläche gegen eine Laufbuchse abdichten, zusammenzusetzen. Die Segmente werden durch eine endlose Spiralfeder zusammengehalten. Die Spiralfeder hat nur eine geringe Kraft, ist starker Korrosion durch das Seewasser ausgesetzt und wird ständig durch die bei Propellerwellen auftretenden Schwingungen belastet. Die Spiralfeder bricht häufig schon nach kurzer Zeit, und die Segmente fallen auseinander, wenn sie nicht genügend durch bis zum äußeren Umfang des Gleitrings vordringendes Seewasser zusammengedrückt werden. Eine solche Dichtung ist aus der DE-A-2 646 475 bekannt.

In DE-A-29 18 418 wird eine Radialdichtung beschrieben, bei der ein geteilter Ring mittels eines Steuerelements, das an einen um den Ring gelegten, geteilten Stützring angreift, mehr oder weniger fest an die auf der Welle befindliche Laufbuchse angedrückt wird. Der Ring muß daher aus einem verformbaren Material bestehen. Insbesondere bei Stevenrohrabdichtungen mit großem Durchmesser besteht die Besorgnis, daß der Ring nicht an allen Teilen seines Umfangs gleichmäßig angedrückt wird, so daß auch der Spalt nicht überall gleich ist und unterschiedlicher Verschleiß eintreten kann. Weitere Nachteile werden darin gesehen, daß durch die Steuerelemente der äußere Umfang der Abdichtungsanordnung vergrößert wird und daß die den Ring umgebenden Teile aus Stahl der Korrosion ausgesetzt sind.

Aus DE-B-18 08 970 ist eine axiale Gleitringdichtung bekannt, bei der ein axial verschiebbarer Gleitring gegen ein Maschinenteil mittels eines Blähkörpers abgestützt ist, wobei der Blähkörper durch Wülste kämmend mit dem Gleitring im Eingriff steht, um ihn axial an den Gegenring zu drücken. Diese Abdichtung ermöglicht nur eine axiale Verschiebung des Gleitrings, und eine Änderung der Anpreßkraft ist nicht vorgesehen, so daß diese Abdichtung wechselnden Betriebsverhältnissen nicht angepaßt werden kann.

Der Erfindung liegt die Aufgabe zugrunde, eine Abdichtungsanordnung für rotierende Wellen, die einen aus Segmenten zusammengesetzten Radialgleitring enthält, so zu verbessern, daß sie auch bei großen Wellendurchmessern, wechselnden Außenwasserdrücken und Korrosionseinflüssen, wie sie bei Seeschiffen vorkommen, über lange Zeit eine ausreichende Abdichtung ergibt, wobei vorzugsweise die Segmente zur Erhöhung der Lebensdauer nur mit der jeweils zur Abdichtung notwendigen Kraft an die Welle angedrückt werden.

Nach der Erfindung wird um den äußeren Umfang des Radialgleitringes ein durch ein Druckmedium ausdehnbarer Blähkörper in Form eines elastischen Schlauches gelegt und die Segmente werden durch den Schlauch zusammengehalten und durch einen veränderlichen Druck des Druckmediums an die üblicherweise auf der Welle angeordnete Laufbuchse angedrückt. Dabei werden die Segmente zwischen Teilen des Dichtungsgehäuses gegen die axiale Verschiebung und gegen Drehen gesichert, bleiben aber radial beweglich und liegen mit ihrer inneren Umfangsfläche abdichtend am Umfang der rotierenden Laufbuchse an. Zweckmäßigerweise ist der Blähkörper in einem Ringraum des Dichtungsgehäuses untergebracht, in dem der äußere Umfang des Schlauches und seine beiden Seiten abgestützt werden, so daß das Druckmedium nur über seinen inneren Umfang und radial nach innen auf die Segmente wirkt.

Der Druck des Druckmediums kann in Abhängigkeit von dem Druck des umgebenden Seewassers einstellbar sein. In einer Ausführung wird das umgebende Seewasser direkt in den Blähkörper eingeleitet. Es besteht jedoch auch die Möglichkeit, unter Verwendung von Seewasser im Blähkörper mit Hilfe von bekannten Regeleinrichtungen, einen Druck dieses Druckmediums einzustellen, der von äußeren Wasserdruck verschieden ist.

In einer bevorzugten Ausführungsform wird ein Druckmedium aus dem Schiffsinneren zugeführt. In diesem Fall kann der Druck im Blähkörper entweder entsprechend dem äußeren Wasserdruck oder entsprechend der durch die Dichtung dringenden Leckmenge gesteuert werden.

Der schlauchförmige Blähkörper ist vorzugsweise an seiner inneren Umfangsfläche mit in Umfangsrichtung verlaufenden, elastisch verformbaren Rippen versehen. Diese legen sich an den äußeren Umfang des Gleitrings an. Hinsichtlich radialer Schwingungen ist die rippenförmige Profilierung der inneren Umfangsfläche des Blähkörpers insofern vorteilhaft, als bei radialen Bewegungen eines Segments gegen den Blähkörper zuerst die Rippen verformt werden und erst danach eine weitere Verformung unter lokaler Verdrängung des Druckmediums in seinem Innenraum erfolgt.

Als ein aus dem Schiffsinneren in den Blähkörper einführbares Druckmedium kommt insbesondere Druckluft inn Frage, mit der auch bei großen Abdichtungsdurchmessern und radialen Schwingungen ein gleichmäßiger Druck auf alle Segmente ausgeübt werden kann.

Unter dem Einfluß des Druckmediums in dem den Gleitring zusammendrückenden Blähkörper stellen sich die Segmente, die sich teilweise überlappen, bei einem Verschleiß an ihrem inneren, auf der Laufbuchse gleitenden Umfang von selbst ein.

Es kann wenigstens ein weiterer Blähkörper verwendet werden, der seitlich gegen den Gleitring drückt, um die radialen Spalte an den beiden radialen Flächen des Gleitrings weitgehend abzuschließen. Eine ein- oder beiderseitige Einspannung der Gleitringsegmente durch seitliche Blähkörper stört jedoch die radiale Anpressung und die nachstellung bei Verschleiß nicht.

Weitere Einzelheiten werden anhand der auf den beigefügten Zeichnungen schematisch dargestellten Ausführungsbeispiele beschrieben.

Es zeigen :

Figur 1 einen Längsschnitt durch eine hintere Stevenrohrabdichtung mit einem durch einen Blähkörper zusammengedrückten Radialgleitring, wobei in den Blähkörper ein Druckmedium aus dem Schiffsinneren eingeleitet wird,

Figur 2 eine Hälfte eines Schnittes wie Figur 1, wobei aber der Blähkörper mit dem äußeren Wasserdruck beaufschlagt wird,

Figur 3 einen Ausschnitt aus einer Abdichtung wie Figur 2, jedoch mit einem anderen Radialgleitring,

Figur 4 eine Hälfte eines Schnittes durch eine hintere Stevenrohrabdichtung, bei der der durch einen Blähkörper zusammengedrückte Radialgleitring eine vor ihm befindliche Sperrmittelkammer gegen das äußere Wasser abdichtet,

Figur 5 einen Querschnitt durch eine bevorzugte Form eines Blähkörpers,

Figur 5a einen Querschnitt durch einen anderen Blähkörper,

Figur 6 einen Ausschnitt aus einem Schnitt durch eine Abdichtung, bei der auch seitliche Blähkörper an dem Radialgleitring vorgesehen sind,

Figur 7 einen aus mehreren Segmenten bestehenden Gleitring.

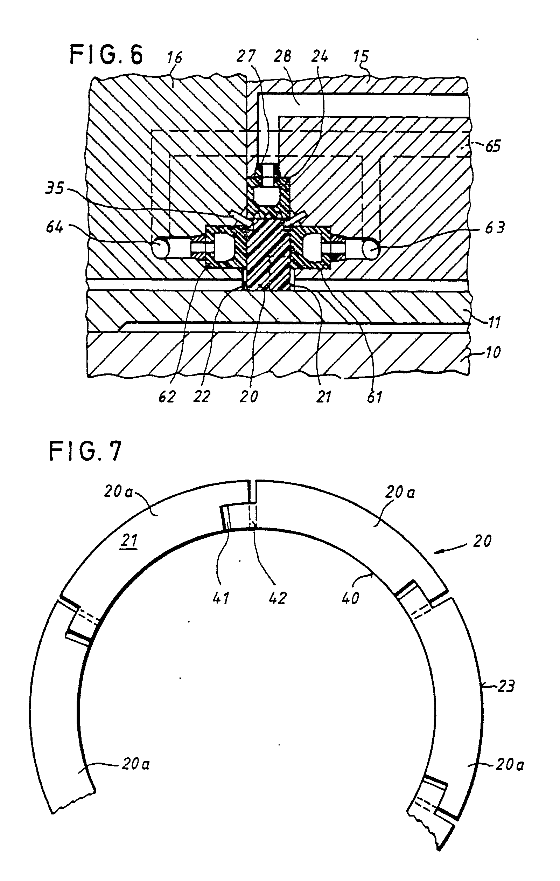

Die Ausführungsbeispiele zeigen die Anwendung der Erfindung bei hinteren Stevenrohrabdichtungen. Auf der Welle 10 ist eine Laufbuchse 11 fest angebracht, die einen Flansch 12 besitzt, welcher an dem nicht dargestellten Propeller befestigt wird. Die Abdichtungsanordnung ist mittels eines Befestigungsflanches 13 and der nicht gezeigten Stevennuß des Schiffes befestigt und schließt das Stevenrohrlager ab. Zu dem Dichtungsgehäuse gehören neben dem Befestigungsflansch 13 mehrere Gehäuseringe 14, 15, 16 und ein Abschlußdeckel 17. In dem Gehäuse sind die Dichtungselemente untergebracht, zu denen beispielsweise ein Paar von Lippendichtungen 18, 19 sowie der Radialgleitring 20 gehören. Der Radialgleitgring 20 ist von einem Blähkörper 24 umgeben. Die Segmente 20a (siehe Fig. 7) des Radialgleitrings 20 und der Blähkörper 24 sind in einem zwischen den Gehäuseringen 15 und 16 gebildeten Ringraum 70 angeordnet, wobei die Segmente axial abgestützt werden, sich aber radial bewegen können.

Hinter dem Radialgleitring 20 ist eine Vorkammer 4 angeordnet, die über einen Kanal 30 und einen Filter 29 mit dem äußeren Seewasser in Verbindung steht. Eine Lippendichtung 32 verhindert das Eindringen von Schmutz aus einer Außenkammer 5 in die Vorkammer 4.

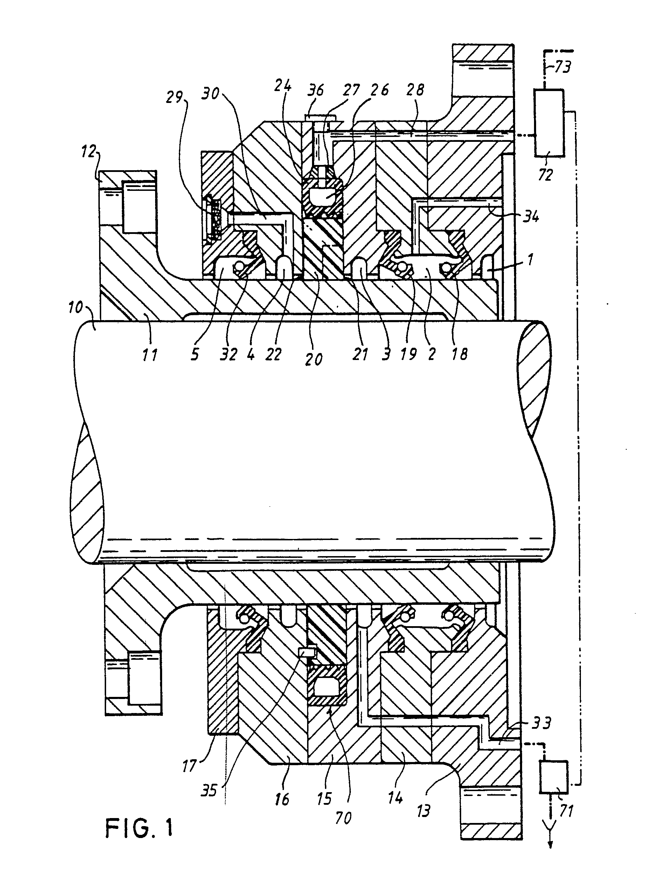

In den Ausführungsbeispielen nach Fig. 1 bis 3 befindet sich vor dem Gleitring 20 ein im wesentlichen druckloser Raum 3 zur Aufnahme von Leckflüssigkeit. Der in der Vorkammer 4 herrschende Seewasserdruck wirkt auf die hintere radiale Fläche 22 des Gleitrings 20 und drückt die vordere, innere radiale Fläche 21 an eine radiale Fläche des Gehäuserings 15 dichtend an. Dabei bildet sich an der hinteren radialen Fläche 22 ein nicht dargestellter kleiner Spalt aus, durch den Seewasser gegebenenfalls bis an die äußere Umfangsfläche des Gleitrings 20 gelangen und beim Zusammendrücken der Segmente mitwirken kann. Der Gleitring 20 wird durch einen Sicherungsstift 35 daran gehindert, sich mit der Welle 10 zu drehen.

Es ist erwünscht, die abdichtende innere Umfangsfläche des Gleitrings 20 mit Wasser zu schmieren. Hierzu kann das Seewasser, welches das abzudichtende Medium ist, aus der Vorkammer 4 benutzt werden. Das Wasser dringt mit einer geringen Leckmenge zwischen Gleitring 20 und Laufbuchse 11 in den Raum 3 ein, und aus diesem wird das Leckwasser über eine Leitung 33 ins Schiffsinnere abgeführt (Fig. 1 bis 3). Der Schmierspalt und damit die Leckmenge sind durch eine Änderung des Anpreßdrucks der Segmente einstellbar.

Gemäß Figur 1 wird dem Innenraum 26 des Blähkörpers 24 ein Druckmedium aus einer Druckleitung 73 in dem Schiffsinneren über ein Anschlußstück 27 und eine Anschlußleitung 28 zugeführt. Zwischen Druckleitung 73 und Anschlußleitung 28 ist eine Druckregeleinrichtung 72 angeordnet, die zur Einstellung des Drucks im Blähkörper 24 und damit des Anpreßdrucks der Segmente und des Schmierspalts dient. Bei diesem Beispiel ist in der Leitung 33 aus dem Raum 3 eine Meßeinrichtung 71 vorgesehen, die die durchlaufende Menge des Leckwassers ermittelt. Meßeinrichtung 71 und Druckregeleinrichtung 72 sind in geeigneter Weise zusammengeschaltet, um durch Einstellung des Drucks im Blähkörper 24 eine zur Schmierung des Gleitrings 20 vorteilhafte kleine Leckmenge unabhängig vom äußeren Wasserdruck und von radialen Bewegungen der Welle oder einem Verschleiß der dichtenden Flächen aufrechtzuerhalten.

Der Blähkörper 24 kann als ein Schlauchstück ausgebildet sein, dessen Enden an einer Stelle des Umfangs zusammenstoßen, wobei diese Ausführung die Montage des Blähkörpers 24 ohne Ausbau der Propellerwelle ermöglicht. Der Blähkörper 24 kann auch aus einer Anzahl von Schlauchstücken gebildet werden, deren Anschlußteile 27 über einen Ringkanal miteinander und mit der den Druck zuführenden Leitung in Verbindung stehen. Die Anzahl der Schlauchstücke kann z. B. gleich der Zahl der Segmente sein, so daß jedem Segment ein Schlauchstück zugeordnet ist. Die Enden der Schlauchstücke stoßen aneinander. Da der Blähkörper 24 elastisch verformbar ist, kann er aber auch als endloser Schlauchring ausgebildet sein. Bei einem Verschleiß der Segmente an ihrem inneren Umfang wird der Blähkörper 24 durch das Druckmedium radial nach innen ausgedehnt, wobei sich der auf die Segmente ausgeübte Druck nicht verändert. Der Blähkörper 24 besteht aus Gummi oder einen ähnlichen elastischen, dehnbaren Material.

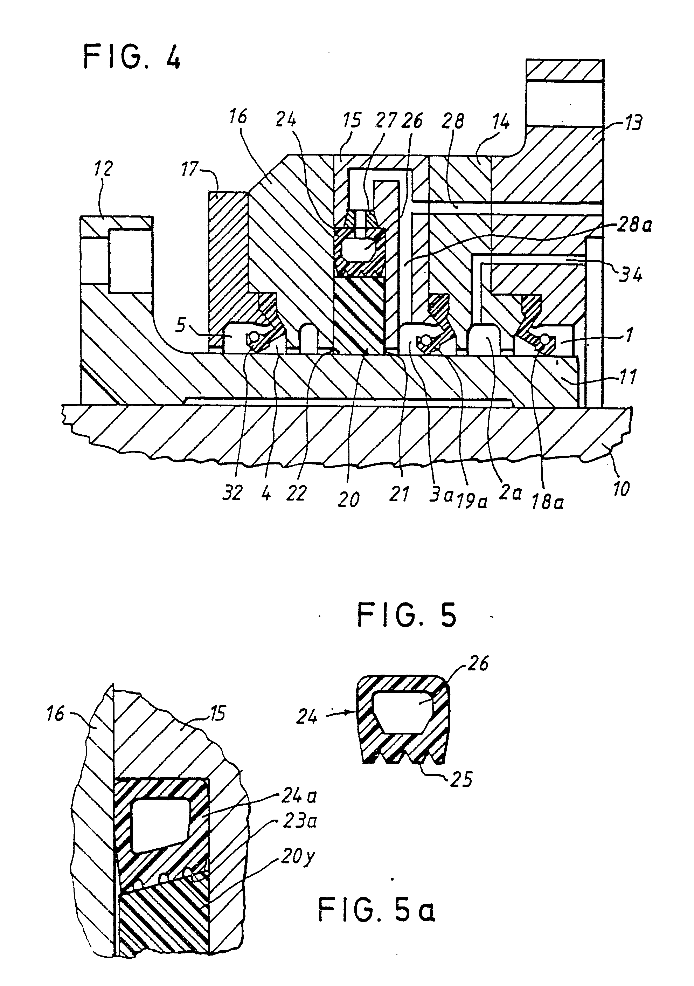

Der Blähkörper 24 kann an seiner inneren Umfangsfläche mit in Umfangsrichtung verlaufenden Rippen 25 versehen sein (Fig. 5), die gegen den äußeren Umfang des Gleitrings 20 drücken. Bei radialen Schwingungen, die während des Betriebs der Propellerwelle auftreten, können sich die Rippen 25 etwas verformen, auch wenn zwischen ihnen Seewasser vorhanden sein sollte. Bei größeren Amplituden weicht das im Innenraum 26 befindliche Druckmedium in Umfangsrichtung aus und eine Verformung des Blähkörpers 24 tritt vorübergehend ein, wobei keine Änderung des Drucks über den Umfang des Gleitrings erfolgt.

Da bei Stevenrohrabdichtungen sehr große Abdichtungsdurchmesser bis zu etwa 1,5 m vorkommen können, ist es möglich, daß ein inkompressibles Medium, wie z. B. Wasser, sich zwar auf eine exzentrische Lage der Welle bzw. des Gleitrings einstellen, aber nicht schnell genug in Umfangsrichtung einer durch eine Schwingung bewirkten, kurzzeitigen örtlichen Zusammendrückung ausweichen kann. Insbesondere wenn mit Schwingungen von höheren Frequenzen und größeren Amplituden gerechnet werden muß, wird daher als Druckmedium Druckluft bevorzugt. Die Druckluft gestattet es, auf besonders einfache Weise den Anpreßdruck der Segmente an die Laufbuchse sowohl in Abhängigkeit von dem sich entsprechend der Eintauchtiefe ändernden Außenwasserdruck als auch von einer gemessenen Leckmenge durch die Gleitringdichtung einzustellen.

Für Montagearbeiten ist es zweckmäßig, wenn der Blähkörper 24 unabhängig vom üblichen Betrieb mit einem Druckmedium gefüllt werden kann. Zu diesem Zweck ist in dem Gehäusering 15 eine Verschlußschraube 36 vorgesehen, die eine Verbindung des Anschlußteils 27 mit einem Druck- oder Unterdruckerzeuger ermöglicht (Fig. 1).

Vor dem drucklosen Raum 3 befindet sich ein weiterer Raum 2 zwischen den Lippendichtungen 18 und 19. Dieser Raum 2 enthält ein flüssiges Medium wie z. B. Öl zur Schmierung und Kühlung der Lippendichtungen, welches durch einen Kanal 34 aus dem Schiffsinneren zugeführt wird. Vor dem Raum 2 ist ein weiterer Raum 1 angedeutet, der mit dem Stevenrohrlager in Verbindung steht und Öl für die Schmierung des Lagers enthält. Der statische Druck des flüssigen Mediums in dem Raum 2 kann höher als der des Öls im Stevenrohrlager sein, und die Lippen der Lippendichtungen 18, 19 sind daher zueinander gerichtet (Fig. 1 bis 3).

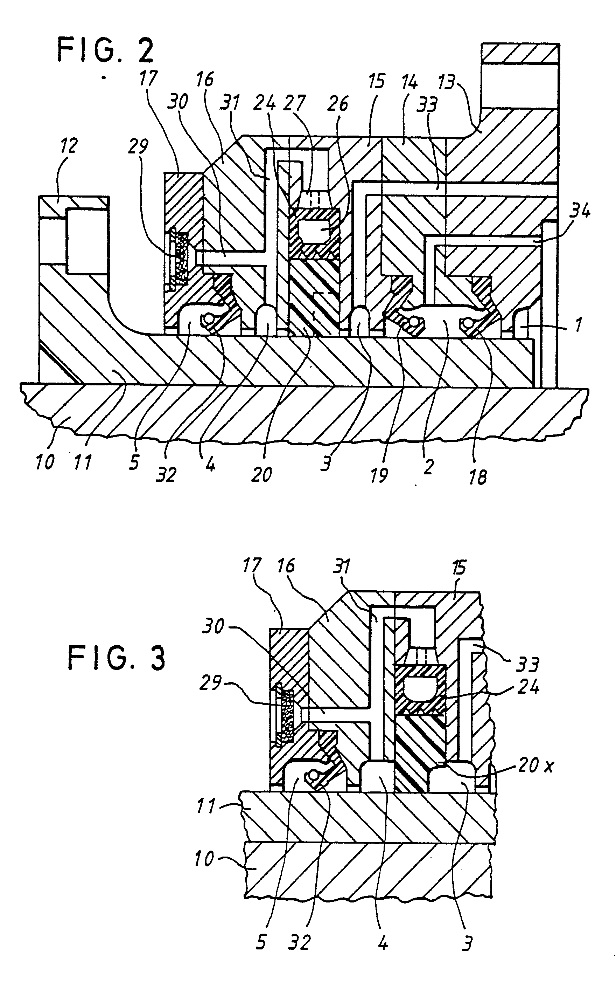

Bei der Ausführungsform nach Figur 2 wird der Innenraum 26 des Blähkörpers 24 von dem umgebenden Seewasser beaufschlagt, welches als Druckmedium wirkt. Dieses gelangt über eine den Druck übertragende Leitung 31 aus dem Filter 29 bzw. der Vorkammer 4 zu dem Anschlußteil 27 des Blähkörpers 24. In diesem Fall erzeugt der von der Eintauchtiefe abhängige äußere Wasserdruck die veränderliche Kraft in dem Blähkörper, die die Segmente des Gleitrings 20 an die Laufbuchse 11 andrückt und den Schmierspalt einstellt. Zweckmäßigerweise umgibt ein als endloser Schlauchring ausgeführter Blähkörper 24 die Segmente des Gleitrings 20 mit einer gewissen Vorspannung, so daß auch in dem Fall, daß der Innenraum 26 nicht mit einem Druckmedium gefüllt ist, die Segmente des Gleitrings nicht auseinanderfallen können. Ein solcher Fall kann z. B. beim Eindocken des Schiffes eintreten.

Die Ausführung gemäß Figur 3 entspricht der vorstehend beschriebenen. Jedoch wird hier ein Radialgleitring 20x verwendet, bei dem die Breite der Umfangsfläche an der Laufbuchse 11 von der Breite der durch den Seewasserdruck beaufschlagten äußeren Umfangsfläche abweicht. Durch die größere Breite der äußeren Umfangsfläche wird der Anpreßdruck der Segmente gegenüber der Ausführung nach Figur 2 erhöht. Selbstverständlich ist bei einem umgekehrten Verhältnis der Umfangsflächen auch ein geringerer Anpreßdruck möglich.

Bei der Ausführung gemäß Figur 4 trennt der Radialgleitring 20 das die Abdichtung umgebende Seewasser und die mit ihm gefüllte Vorkammer 4 von einem Raum 3a, in dem ein höherer Druck als außen im Seewasser herrscht. Der Druck in dem Raum 2a zwischen den Lippendichtungen 18a und 19a ist geringer als der Druck im Raum 3a. Aus dem Raum 3a gelangt das in ihm befindliche medium, z. B. gereinigtes Seewasser, mit einer geringen Leckmenge durch die Gleitringdichtung nach außen hindruch, schmiert dabei den Gleitring 20 und verhindert das Eindringen von Schmutz in den Dichtungsspalt. In diesem Fall wird die äußere radiale Gleitringfläche 22 an eine radiale Fläche des Gehäuserings 16 abdichtend angedrückt. Das Medium in dem Raum 3a ist auch das Druckmedium für den Blähkörper 24 und wird über die Leitung 28 und einen Kanal 28a aus dem Schiffsinneren zugeführt. Getrennte Zuleitungen und verschiedene Drücke sind selbstverständlich möglich.

Figur 5 zeigt einen vergrößerten Querschnitt durch einen bevorzugten Blähkörper 24 mit Rippen 25 an seiner inneren Umfangsfläche. Figur 5a stellt einen etwas anderen Blähkörper 24a dar, dessen innere Umfangsfläche etwas konisch verläuft und an einer ebenfalls konischen äußeren Umfangsfläche 23a eines Gleitrings 20y anliegt, so daß das Druckmedium die Segmente des Gleitrings nicht nur radial zusammendrückt, sondern infolge der Gestaltung der Umfangsflächen auch axial zur abdichtenden Anlage an eine radiale Fläche, beispielsweise des Gehäuseringes 15, anpreßt, wenigstens solange ein entsprechender axialer Druck durch das abzudichtende Medium, wie z. B. das äußere Seewasser in den Ausführungen nach Fig. 1 bis 3, nicht ausreichend wirksam ist. Blähkörper 24a und Gleitring 20y können bei den Beispielen nach Fig. 1 bis 4 eingesetzt werden.

Figur 6 zeigt einen Ausschnitt aus einer Abdichtung. Zusätzlich zu dem Blähkörper 24, der die Segmente des Gleitrings 20 an die Laufbuchse 11 andrückt, sind seitlich des Gleitrings 20 zwei weitere ringförmige Blähkörper 61, 62 angeordnet, die gegen die radialen Gleitringflächen 21, 22 drücken und somit den Gleitring 20 axial einspannen. Die Blähkörper 61, 62 ergeben eine in axialer Richtung elastische Lagerung des Gleitrings 20, die z. B. bei axialen Schwingungen der Welle 10 vorteilhaft ist. Sie lassen außerdem eine Stellung des Gleitrings 20 zu, bei der seine Achse zur Achse der Gehäuseringe 15, 16 nicht parallel ist. Ein solches Verkanten des Gleitrings kann z. B. bei einer Verbiegung der Welle 10 eintreten und würde zu einem erhöhten Verschleiß des Gleitrings sowohl an der inneren Umfangsfläche als auch an den abdichtenden radialen Gleitringflächen 21, 22 führen. Den Blähkörpern 61, 62 wird ein Druckmedium über die Kanäle 63, 64 zugeführt, welches bei den in Figur 6 gezeigten Beispielen über eine Leitung 65 aus dem Schiffsinneren kommt. Es ist möglich, die Kanäle 63, 64 an die Anschlußleitung 28 anzuschließen. Gegebenenfalls kann in die Kanäle 63, 64 auch entsprechend der Ausführung gemäß Figur 2 das die Abdichtung umgebende Seewasser eingeleitet werden. Wenigstens ein zusätzlicher, axial den Gleitring 20 sützender Blähkörper 61, 62 kann in den Ausführungen nach Fig. 1, 2, 3 oder 4 verwendet werden.

Figur 7 zeigt ein Beispiel für die bei der Abdichtungsanordnung verwendete Segmente 20a eines Gleitrings 20. Sechs Segmente 20a bilden den Gleitring 20, dessen äußere Umfangsfläche 23 von einem Blähkörper 24 (gemäß Figur 5) umgeben wird und dessen innere Umfangsfläche 40 gleitend auf der rotierenden Laufbuchse 11 aufliegt. Jedes Segment 20a ist an einem Ende mit einer Ausnehmung 41 versehen, die sich am inneren Umfang befindet und etwa die halbe Dicke des Gleitrings hat. Am anderen Ende jedes Segments befindet sich eine Zunge 42, die in die Ausnehmung 41 vorspringt. Die Zunge 42 füllt den Querschnitt der Ausnehmung 41 vollständig aus, aber zwischen den einander in Umfangsrichtung zugewandten Kanten zweier Segmente befinden sich radiale Spalte, die ein mehr oder weniger starkes Andrücken und eine Nachstellung bei Verschleiß an der inneren Umfangsfläche ermöglichen. Die Segmente 20a liegen mit ihren die Zungen 42 enthaltenden Flächen 21 an einer Gegenfläche, z. B. des Gehäuseringes 15 in Figur 1 und 2 oder an dem Blähkörper 61 in Figur 6 wenigstens teilweise an, wobei auch die in Umfangsrichtung verlaufende Trennfuge an der Zunge 42 durch die Gegenfläche abgedeckt wird, so daß auch zwischen dem Gleitring und der Gegenfläche eine Abdichtung erhalten wird. Die Segmente 20a des Gleitrings 20 bestehen aus einem harten korrosions- und verschleißfesten Material wie Kohlenstoff (Graphit), Bronze, hartem Kunststoff oder sind aus diesen oder ähnlichen Materialen zusammengesetzt.

Durch die erfindungsgemäßen Blähkörper wird ein gleichmäßiges und in jeder Richtung elastisches Andrücken der Segmente auch bei eintretendem Verschleiß, bei radialen und axialen Schwingungen und großen Abdichtungsdurchmessern erreicht. Schädliche Rückwirkungen von Schwingungen der Welle auf den Gleitring und von plötzlichen Änderungen von Beanspruchungen der Abdichtung durch äußere Einflüsse, wie z. B. durch Druckänderungen des abzudichtenden Mediums, werden vermindert oder sogar ganz ausgeglichen. Es werden Mittel zum Zusammenhalten der Segmente verwendet, die nicht durch Seewasser angegriffen werden. Insbesondere in den bevorzugten Ausführungsformen mit einer Zuführung des Druckmediums vom Schiffsinneren ist der Anpreßdruck beliebig einstellbar, so daß jeweils nur so viel Wasser durch die Dichtung dringt, wie zur Schmierung notwendig ist, aber auch hoher Verschleiß durch zu großen Anpreßdruck vermieden wird. Sicherheit und Lebensdauer des Radialgleitrings werden erhöht. Der Radialgleitring ist für Propellerwellen besonders vorteilhaft, daher axiale Bewegungen der Welle mit der Laufbuchse zuläßt. Die Abdichtungsanordnungen sind besonders vorteilhaft, wenn sowohl das Eindringen von Wasser in das Stevenrohrlager als auch das Austreten von Öl aus diesem Lager ins Wasser verhindert werden soll.

Die Erfindung ist nicht auf Stevenrohrabdichtungen oder Seewasser als dem abzudichtenden Medium beschränkt, sondern kann auch bei Maschinen, Rühreinrichtungen usw. und für andere abzudichtende Flüssigkeiten eingesetzt werden.

**Patentansprüche**

1. Abdichtungsanordnung für rotierende Wellen, insbesondere Stevenrohrabdichtung, mit einem Radialgleitring (20), der aus sich überlappenden, radial beweglichen Segmenten (20a) besteht, deren innere Umfangsflächen an einer Welle (10) oder einer mit der Welle umlaufenden Laufbuchse (11) abdichten, wobei der Radialgleitring in einem Ringraum (70) eines Gehäuses, (15, 16) angeordnet und von Mitteln (24) zum Zusammenhalten der Segmente umgeben ist, dadurch gekennzeichnet, daß die Mittel zum Zusammenhalten der Segmente (20a) aus wenigstens einem Blähkörper (24) in Form eines elastischen Schlauches bestehen, dieser Blähkörper (24) in dem Ringraum (70) angeordnet und an seinem äußeren Umfang sowie seitlich abgestützt ist und Einrichtungen (28, 72, 31) zur Zuführung eines Druckmediums von veränderbarem Druck vorgesehen sind, um durch Ausdehnung des inneren Umfangs des Blähkörpers (24) die Segmente (20a) entsprechend dem Druck des Druckmediums radial gegen die Welle (10) oder die Laufbuchse (11) drücken zu können.

2. Abdichtungsanordnung nach Anspruch 1, dadurch gekennzeichnet, daß die dem Radialgleitring (20) zugewandte innere Umfangsfläche des Blähkörpers (24) mit in Umfangsrichtung verlaufenden, elastisch verformbaren Rippen (25) versehen ist.

3. Abdichtungsanordnung nach einem der Ansprüche 1 oder 2, dadurch gekennzeichnet, daß wenigstens an einer radialen Fläche des Radialgleitrings (20) ein weiterer, seitlicher Blähkörper (61, 62) angeordnet ist, der zusammen mit einer Gegenfläche den Gleitring (20) in axialer Richtung einspannt und mit Einrichtungen (63, 64, 65) zur Zuführung eines Druckmediums verbunden ist.

4. Abdichtungsanordnung nach einem der Ansprüche 1 bis 3, dadurch gekennzeichnet, daß die äußere Umfangsfläche des Radialgleitrings (20) und die innere Umfangsfläche des Blähkörpers (24) so ausgebildet sind, daß der Blähkörper (24a) den Gleitring (20y) auch axial an eine radiale Fläche des Ringraums (70) andrücken kann.

5. Abdichtungsanordnung nach einem der Ansprüche 1 bis 4, dadurch gekennzeichnet, daß der die Segmente (20a) umgebende Blähkörper (24) ein endloser Schlauch ist, dessen innerer Umfang in ungespanntem Zustand kleiner als der äußere Umfang des Gleitrings (20) ist, so daß der Blähkörper (24) die Segmente des Gleitrings (20) mit einer Vorspannung zusammenhalten und an die Laufbuchse (11) andrücken kann.

6. Abdichtungsanordnung nach einem der Ansprüche 1 bis 4, dadurch gekennzeichnet, daß die Blähkörper (24, 61, 62) aus einem oder mehreren Schlauchstücken bestehen, die an ihren Enden verschlossen sind und deren Enden aneinanderstoßen.

7. Abdichtungsanordnung nach einem der Ansprüche 1 bis 6, dadurch gekennzeichnet, daß der Druck des Druckmediums im Blähkörper (24) in Abhängigkeit von dem Druck des abzudichtenden Mediums einstellbar ist.

8. Stevenrohrabdichtung nach Anspruch 7, dadurch gekennzeichnet, daß der Blähkörper (24) über Leitungen (30, 31) mit dem umgebenden Seewasser verbunden ist, so daß das die Abdichtungsanordnung umgebende Seewasser als Druckmedium den Blähkörper (24) ausfüllt.

9. Stevenrohrabdichtung nach einem der Ansprüche 1 bis 7, dadurch gekennzeichnet, daß der Blähkörper (24) über eine Anschlußleitung (28) mit einer Druckregeleinrichtung (72) für die Zuführung eines Druckmediums mit einstellbarem Druck aus dem Schiffsinneren verbunden ist.

10. Stevenrohrabdichtung nach Anspruch 9, dadurch gekennzeichnet, daß an den Radialgleitring (20) zum Schiffsinneren hin ein im wesentlichen leerer Raum (3) anschließt, der mit einer aus ihm Leckwasser abführenden Leitung (33) versehen ist, daß an der Leitung (33) eine Meßeinrichtung (71) zur Ermittlung der Leckmenge angeordnet ist, und diese Meßeinrichtung (71) die Druckregeleinrichtung (72) steuert.

**Claims**

1. Sealing arrangement for rotating shafts, particularly stem tube seal, with a radial slide ring (20), which consists of overlapping, radially movable segments (20a), the inner circumferential surfaces of which seal off at a shaft (10) or a liner (11) rotating with the shaft, wherein the radial slide ring is arranged in an annular space (70) of a housing (15, 16) and surrounded by means (24) for holding the segments together, characterised thereby, that the means for holding the segments (20a) together consist of at least one inflattable body (24) in the form of an elastic hose, this inflatable body (24) is arranged in the annular space (70) and is supported at its outer circumference as well as laterally and equipments (28, 72, 31) are provided for the supply of a pressure medium at variable pressure in order through expansion of the inner circumference of the inflatable body (24) to be able to press the segments (20a) radially against the shaft (10) or the liner (11) in correspondence with the pressure of the pressure medium.

2. Sealing arrangement according to claim 1, characterised thereby, that the inner circumferential surface of the inflatable body (24) faces the radial slide ring (20) and is provided with elastically deformable ribs (25) extending in circumferential direction.

3. Sealing arrangement according to one of the claims 1 or 2, characterised thereby, that a further lateral inflatable body (61, 62), which together with a countersurface clamps the slide ring (20) in axial direction and is connected with equipments (63, 64, 65) for the supply of a pressure medium, is arranged at least one radial surface of the radial slide ring (20).

4. Sealing arrangement according to one of the claims 1 to 3, characterised thereby, that the outer circumferential surface of the radial slide ring (20) and the inner circumferential surface of the inflatable body (24) are so formed that the inflatable body (24) can press the slide ring (20y) also axially against a radial surface of the annular space (70).

5. Sealing arrangement according to one of the claims 1 to 4, characterised thereby, that the inflatable body (24) surrounding the segments (20a) is an endless hose, the inner circumference of which in the unstressed state is smaller than the outer circumference of the slide ring (20) so that the inflatable body (24) can hold the segments of the slide ring (20) together under a bias and press them against the liner (11).

6. Sealing arrangement according to one of the claims 1 to 5, characterised thereby, that the inflatable bodies (24, 61, 62) consist of one or more hose pieces, which are closed off at their ends and the ends of which about one against the other.

7. Sealing arrangement according to one of the claims 1 to 6, characterised thereby, that the pressure of the pressure medium in the inflatable body (24) is settable in dependence on the pressure of the medium to be sealed off.

8. Stern tube seal according to claim 7, characterised thereby, that the inflatable body (24) is connected through ducts (30, 31) with the surrounding sea water so that the sea water surrounding the sealing arrangement fills the inflatable body (24) as pressure medium.

9. Stern tube seal according to one of the claims 1 to 7, characterised thereby, that the inflatable body (24) is connected through a connecting duct (28) with a pressure-regulating equipment (72) for the supply of a pressure medium at settable pressure from the interior of the ship.

10. Stern tube seal according to claim 9, characterised thereby, that a substantially empty space (3) adjoins the radial slide ring (20) towards the interior of the ship and is provided with a duct (33) conducting leakage water away out of it, that a measuring equipment (71) for the determination of the leakage quantity is arranged at the duct (33) and that this measuring equipment (71) controls the pressure-regulating equipment (72).

## Revendications

1. Dispositif d'étanchéité pour des arbres tournants, en particulier joint d'étanchéité de tube d'étambot, comportant une bague à glissement radial (20) composée de segments (20a) chevauchants et mobiles dans le sens radial, dont les surfaces périphériques intérieures forment une étanchéité avec un arbre (10) ou une fourrure (11) tournant avec l'arbre, la bague à glissement radial étant disposée dans un espace annulaire (70) d'une boîte (15, 16) et ceinturée par des moyens (24) pour maintenir assemblés les segments, caractérisé en ce que les moyens pour maintenir assemblés les segments (20a) sont constitués par au moins un corps gonflable (24) sous la forme d'un boudin élastique, en ce que ledit corps gonflable (24) est disposé dans l'espace annulaire (70) et est soutenu sur sa périphérie extérieure ainsi que latéralement, et en ce que des dispositifs (28, 72, 31) destinés à introduire un fluide de pression à pression modifiable sont prévus, en vue de mettre en appui radialement contre l'arbre (10) ou la fourrure (11) les segments (20a) en fonction de la pression du fluide de pression, grâce à une expansion de la périphérie intérieure du corps gonflable (24).

2. Dispositif d'étanchéité selon la revendication 1, caractérisé en ce que les surfaces périphériques intérieures du corps gonflable (24) faisant face à la bague à glissement radial (20) sont pourvues de nervures (25) déformables élastiquement et s'étendant dans le sens périphérique.

3. Dispositif d'étanchéité selon l'une des revendications 1 ou 2, caractérisé en ce qu'au moins un autre corps gonflable (61, 62) latéral est disposé sur une surface radiale de la bague à glissement radial (20), ledit corps gonflable (61, 62) serrant la bague à glissement (20) dans le sens axial en coopérant avec une contreface, et étant pourvu de dispositifs (63, 64, 65) destinés à introduire un fluide de pression.

4. Dispositif d'étanchéité selon l'une quelconque des revendications 1 à 3, caractérisé en ce que la surface périphérique extérieure de la bague à glissement radial (20) et la surface périphérique intérieure du corps gonflable (24) ont une configuration telle que le corps gonflable (24a) est apte à mettre la bague à glissement (20y) en appui sur une surface radiale de l'espace annulaire (70) même dans le sens axial.

5. Dispositif d'étanchéité selon l'une quelconque des revendications 1 à 4, caractérisé en ce que le corps gonflable (24) ceinturant les segments (20a) est un boudin fermé dont la périphérie intérieure à l'état non tendu est plus petite que la périphérie extérieure de la bague à glissement (20), de sorte que le corps gonflable (24) est apte à maintenir assemblés les segments de la bague à glissement (20) et à les mettre en appui sur la fourrure (11) avec une tension initiale.

6. Dispositif d'étanchéité selon l'une quelconque des revendications 1 à 4, caractérisé en ce que les corps gonflables (24, 61, 62) sont constitués par un ou plusieurs tronçons de boudin qui sont fermés à leurs extrémités et qui se touchent par leurs extrémités.

7. Dispositif d'étanchéité selon l'une quelconque des revendications 1 à 6, caractérisé en ce que la pression du fluide de pression dans le corps gonflable (24) est ajustable en fonction de la pression du fluide vis-à-vis duquel l'étanchéité doit être réalisée.

8. Joint d'étanchéité pour tube d'étambot selon la revendication 7, caractérisé en ce que le corps gonflable (24) communique avec l'eau de mer environnante par l'intermédiaire de conduites (30, 31), de sorte que l'eau de mer entourant le dispositif d'étanchéité remplit le corps gonflable (24) en servant de fluide de pression.

9. Joint d'étanchéité pour tube d'étambot selon l'une quelconque des revendications 1 à 7, caractérisé en ce que le corps gonflable (24) est en communication avec une pression ajustable provenant de l'intérieur du navire par l'intermédiaire d'une conduite de raccordement (28) pourvue d'un dispositif régulateur de pression (72) destiné à l'introduction d'un fluide de pression.

10. Joint d'étanchéité pour tube d'étambot selon la revendication 9, caractérisé en ce qu'un espace (3) sensiblement vide qui est pourvu d'une conduite (33) évacuant de l'eau de fuite hors dudit espace (3), fait suite à la bague à glissement radial (20) en direction de l'intérieur du navire, en ce qu'un dispositif de mesure (71) pour la détermination de la quantité de fuite est disposé sur la conduite (33), ce dispositif de mesure (71) commandant le dispositif régulateur de pression (72).

FIG. 1

0 079 480

1

# FIG. 2

# FIG. 3

**FIG. 4**

**FIG. 5**

**FIG. 5a**

## FIG. 6

## FIG. 7